(19) Europäisches Patentamt
European Patent Office
Office européen des brevets

(11) **EP 4 657 560 A1**

(12) **EUROPEAN PATENT APPLICATION**
published in accordance with Art. 153(4) EPC

(43) Date of publication:
**03.12.2025 Bulletin 2025/49**

(21) Application number: **24873029.3**

(22) Date of filing: **27.09.2024**

(51) International Patent Classification (IPC):
$H01M\ 4/36^{(2006.01)}$    $H01M\ 4/48^{(2010.01)}$
$H01M\ 4/38^{(2006.01)}$    $H01M\ 4/62^{(2006.01)}$
$H01M\ 4/134^{(2010.01)}$    $H01M\ 10/052^{(2010.01)}$
$C01B\ 33/021^{(2006.01)}$    $H01M\ 4/02^{(2006.01)}$

(52) Cooperative Patent Classification (CPC):
**C01B 33/021; H01M 4/02; H01M 4/134; H01M 4/36;**
**H01M 4/38; H01M 4/48; H01M 4/62; H01M 10/052;**
**Y02E 60/10**

(86) International application number:
**PCT/KR2024/014707**

(87) International publication number:
**WO 2025/071321 (03.04.2025 Gazette 2025/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **27.09.2023 KR 20230130500**
           **26.09.2024 KR 20240130793**

(71) Applicant: **LG Energy Solution, Ltd.**
**Seoul 07335 (KR)**

(72) Inventors:
• **KIM, Dohyeun**
  **Daejeon 34122 (KR)**
• **KIM, Donghyuk**
  **Daejeon 34122 (KR)**
• **LEE, Yong Ju**
  **Daejeon 34122 (KR)**
• **HEO, Jihoi**
  **Daejeon 34122 (KR)**

(74) Representative: **Hoffmann Eitle**
**Patent- und Rechtsanwälte PartmbB**
**Arabellastraße 30**
**81925 München (DE)**

(54) **NEGATIVE ELECTRODE ACTIVE MATERIAL, METHOD FOR PREPARING NEGATIVE ELECTRODE ACTIVE MATERIAL, NEGATIVE ELECTRODE COMPOSITION, NEGATIVE ELECTRODE FOR LITHIUM SECONDARY BATTERY COMPRISING SAME, AND LITHIUM SECONDARY BATTERY COMPRISING NEGATIVE ELECTRODE**

(57) The present application relates to: a negative electrode active material comprising a first silicon-based active material and a coating layer provided on the surface of the first silicon-based active material, wherein the coating layer includes a second silicon-based active material, and the grain size of the second silicon-based active material is 20 nm to 200 nm; a method for preparing the negative electrode active material; a negative electrode composition; a negative electrode for a lithium secondary battery, the negative electrode comprising same; and a lithium secondary battery comprising the negative electrode.

[Figure 1]

MG-Si → (HF etching) → Porous Si → (SiH4 Coating) → Pore distribution controlled Si

Small crystalline Silicon layer

EP 4 657 560 A1

**Description**

[Technical Field]

This application claims priority to and the benefit of Korean Patent Application No. 10-2023-0130500 filed in the Korean Intellectual Property Office on September 27, 2023, and Korean Patent Application No. 10-2024-0130793 filed in the Korean Intellectual Property Office on September 26, 2024, the entire contents of which are incorporated herein by reference.

The present application relates to a negative electrode active material, a method for manufacturing a negative electrode active material, a negative electrode composition, a negative electrode for a lithium secondary battery including the same, and a lithium secondary battery including a negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and increased demand for mobile devices, the demand for secondary batteries as energy sources is increasing sharply. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions coming out from the positive electrode, and silicon-based particles having a high discharge capacity may be used as the negative electrode active material.

In particular, due to the demand for high-density energy batteries in recent years, research is being actively conducted on methods to increase a capacity by using together a silicon-based compound, such as Si/C and SiOx, having a capacity 10 times or more than that of a graphite-based material, as a negative electrode active material. However, compared with graphite, which is typically used, a silicon-based compound that is a high-capacity material has a large capacity but undergoes rapid volume expansion during charging, thereby disconnecting a conductive path to degrade battery characteristics.

Accordingly, in order to solve problems occurring when the silicon-based compound is used as the negative electrode active material, methods of suppressing the volume expansion itself, such as a method of controlling a driving potential, a method of additionally further coating a thin film on an active material layer, and a method of controlling a particle diameter of a silicon-based compound, or various methods for preventing a conductive path from being disconnected have been discussed. However, such methods may rather deteriorate the performance of a battery, and thus, the application thereof is limited, so that there is still a limitation in commercializing the manufacture of a battery including a negative electrode with a high content of a silicon-based compound.

In addition, recently, when using silicon-based active materials, the porosity is adjusted to a certain high range to alleviate the stress caused by particle expansion/contraction due to intercalation/deintercalation of lithium during charging/discharging, thereby preventing breakage of the silicon-based active material and improving the service life performance by providing a pathway for Li ions, which facilitates electrolyte penetration into the active material. However, for the silicon-based active materials with adjusted porosity as described above, as the cycle progresses, a SEI (solid electrolyte interphase) side reaction layer accumulates on the surface, clogging the particle pores, resulting in a rapid decrease in service life performance after a certain number of cycles.

Therefore, research is needed on a silicon-based active material itself that, even when the silicon-based active material is used as a negative electrode active material for improving capacity performance, can prevent the decrease in the service life performance caused by the volume expansion of the silicon-based compound.

Citation List

[Patent Document] Japanese Patent Application Publication No. 2009-080971

[Detailed Description of the Invention]

[Technical Problem]

It was found that, when a silicon-based active material with small crystal grains is formed on a surface of a conventional silicon-based active material with pores through a Si deposition reaction to provide a double-layer structure, pore clogging, due to SEI layer formation caused by the continuous and direct exposure of the porous silicon-based active material to the electrolyte, can be prevented; in addition, the coating of the silicon-based active material with small crystal grains can prevent clogging due to Li ions even when the reaction progresses with many grain boundaries, allowing it to function as a Li ion channel.

Accordingly, the present application relates to a negative electrode active material, a method for manufacturing a negative electrode active material, a negative electrode composition, a negative electrode for a lithium secondary battery including the same, and a lithium secondary battery including a negative electrode capable of solving the above-described problems.

[Technical Solution]

An exemplary embodiment of the present specification provides a negative electrode active material including a first silicon-based active material with pores; and a coating layer provided on a surface of the first silicon-based active material, wherein the coating layer includes a second silicon-based active material, and a crystal grain size of the second silicon-based active material is 20 nm or greater and 200 nm or less.

Another exemplary embodiment provides a method for manufacturing a negative electrode active material, the method including: etching a silicon raw material to prepare a first silicon-based active material with pores; and depositing a silicon-containing gas on the first silicon-based active material to form a coating layer provided on a surface of the first silicon-based active material; wherein the coating layer includes a second silicon-based active material, and a crystal grain size of the second silicon-based active material is 20 nm or greater and 200 nm or less.

Still another exemplary embodiment provides a negative electrode composition including: the negative electrode active material according to the present application; a negative electrode conductive material; and a negative electrode binder.

Yet another exemplary embodiment provides a negative electrode for a lithium secondary battery including: a negative electrode current collector layer; and a negative electrode active material layer provided on one surface or both surfaces of the negative electrode current collector layer, wherein the negative electrode active material layer includes the negative electrode composition according to the present application or a cured product thereof.

Still yet another exemplary embodiment provides a lithium secondary battery including: a positive electrode; the negative electrode for a lithium secondary battery according to the present application; a separator provided between the positive electrode and the negative electrode; and an electrolyte.

[Advantageous Effects]

In view of the above-described problems, the negative electrode active material according to an exemplary embodiment of the present invention has such a feature that a silicon-based active material with small crystal grains is coated on a surface of a conventional silicon-based active material with pores through a Si deposition reaction.

Through the coating layer as described above, pore clogging, due to SEI layer formation caused by the continuous and direct exposure of the silicon-based active material with pores to the electrolyte, can be prevented, and in addition, the silicon-based active material with small crystal grains is used for the coating layer to prevent clogging due to Li ions even when the reaction progresses with many grain boundaries, allowing it to function as a Li ion channel.

That is, the initial efficiency can be improved by suppressing the SEI layer side reaction of the first silicon-based active material with pores, and the pores in the first silicon-based active material and the grain boundaries in the surface portion of the second silicon-based active material alleviate the stress caused by the reaction between lithium and silicon, thereby reducing particle breakage and improving service life performance.

[Brief Description of Drawings]

FIG. 1 is a view showing a preparation process of a silicon-based active material according to Example 1 of the present application.
FIG. 2 is a view showing a preparation process of a silicon-based active material according to Comparative Example 1 of the present application.
FIG. 3 is a view showing a stack structure of a negative electrode for a lithium secondary battery according to an exemplary embodiment of the present application.
FIG. 4 is a view showing a stack structure of a lithium secondary battery according to an exemplary embodiment of the present application.
FIG. 5 is a view showing a method of calculating a crystal grain (crystallite) size.
FIG. 6 is a view showing a method for calculating a surface area porosity of a first silicon-based active material.
FIG. 7 is a view showing a method for calculating a volume porosity of the first silicon-based active material.

<Explanation of Reference Numerals and Symbols>

10: negative electrode current collector layer
20: negative electrode active material layer
30: separator
40: positive electrode active material layer
50: positive electrode current collector layer
100: negative electrode for lithium secondary battery
200: positive electrode for lithium secondary battery

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In the present specification, the "specific surface area" is measured by the BET method, and specifically, is calculated from a nitrogen gas adsorption amount at a liquid nitrogen temperature (77K) by using BELSORP-mini II available from BEL Japan, Inc. That is, in the present application, the BET specific surface area may refer to the specific surface area measured by the above measurement method.

In the present specification, "Dn" refers to a particle size distribution, and refers to a particle diameter at the n% point in the cumulative distribution of the number of particles according to the particle diameter. That is, D50 is a particle diameter (average particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Note that the average particle diameter may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In an exemplary embodiment of the present application, the particle size or particle diameter may mean an average diameter or representative diameter of each particle constituting the metal powder.

In the present specification, the description "a polymer includes a certain monomer as a monomer unit" means that the monomer participates in a polymerization reaction and is included as a repeating unit in the polymer. In the present specification, when a polymer includes a monomer, this is interpreted to be the same as when the polymer includes a monomer as a monomer unit.

In the present specification, it is understood that the term 'polymer' is used in a broad sense including a copolymer unless otherwise specified as 'a homopolymer'.

In the present specification, the weight average molecular weight (Mw) and the number average molecular weight (Mn) are polystyrene-converted molecular weights measured by gel permeation chromatography (GPC) using, as standard materials, monodisperse polystyrene polymers (standard samples) of various degrees of polymerization commercially available for molecular weight measurement. In the present specification, the molecular weight refers to a weight average molecular weight unless particularly described otherwise.

Hereinafter, embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a negative electrode active material including a first silicon-based active material with pores; and a coating layer provided on a surface of the first silicon-based active material, wherein the coating layer includes a second silicon-based active material, and a crystal grain size of the second silicon-based active material is 20 nm or greater and 200 nm or less.

With the above configuration, the initial efficiency can be improved by suppressing the SEI layer side reaction of the first silicon-based active material with pores, and the pores in the first silicon-based active material and the grain boundaries in the surface portion of the second silicon-based active material alleviate the stress caused by the reaction between lithium and silicon, thereby reducing particle breakage and improving service life performance.

Specifically, the first silicon-based active material (core) with large crystal grains of silicon or pores makes it less prone to particle breakage even with volume expansion, and additionally secures a pathway for Li ion migration therein, making breakage less likely to occur even during charging and discharging, through the formation of a double-layer structure with the second silicon-based active material with small crystal grains.

This will be described in more detail below.

An exemplary embodiment of the present application may include a first silicon-based active material with pores.

In the present application, the first silicon-based active material with pores may be expressed as a core part.

In the present application, there is provided the negative electrode active material in which a porosity of the first silicon-based active material is 10% or higher and 40% or less.

In another exemplary embodiment, the porosity of the first silicon-based active material may be 10% or higher and 40% or less, preferably 12% or higher and 35% or less, and more preferably 15% or higher and 30% or less.

In the present application, the porosity may refer to a ratio of voids in a porous material to a total volume thereof, or may refer to a ratio of perforated portions to a surface area of a material.

Specifically, in the present application, there is provided the negative electrode active material in which a surface area porosity of the first silicon-based active material satisfies Formula 1 below.

$$[Formula\ 1]$$

$$1.0 \leq Sp \leq 12.0$$

in Formula 1,

Sp refers to a surface area of the first silicon-based active material with pores/a surface area of the first silicon-based active material before pore formation.

That is, the first silicon-based active material undergoes an etching process described below to form pores, and in this case, the surface area porosity may refer to a ratio of a surface area after the etching process (i.e., the first silicon-based active material after pore formation) to a surface area before the etching process (i.e., the first silicon-based active material before pore formation).

In the present application, Formula 1 above may be $1.0 \leq Sp \leq 12.0$, preferably $1.1 \leq Sp \leq 9.9$, and more specifically $1.3 \leq Sp \leq 9.85$.

In the present application, there is provided the negative electrode active material in which a volume porosity of the first silicon-based active material satisfies Formula 2 below.

$$[Formula\ 2]$$

$$1.0 \leq Vp \leq 11.0$$

Vp refers to a volume of the first silicon-based active material with pores/a volume of the first silicon-based active material before pore formation.

That is, the first silicon-based active material undergoes an etching process described below to form pores, and in this case, the volume porosity may refer to a ratio of a volume after the etching process (i.e., the first silicon-based active material after pore formation) to a volume before the etching process (i.e., the first silicon-based active material before pore formation).

In the present application, Formula 2 above may fall within a range of $1.0 \leq Vp \leq 11.0$, preferably $1.1 \leq Vp \leq 8.0$, and more preferably $1.3 \leq Vp \leq 6.5$.

In the present application, the first silicon-based active material has the porosity defined by Formula 1 or 2 above, thereby alleviating the stress caused by intercalation/deintercalation of lithium during charging/discharging to prevent particle breakage, and functioning as a pathway for Li ion that facilitates electrolyte penetration into the active material to improve service life performance.

However, the main feature lies in solving the conventional problem of reduced service life performance due to the accumulation of the SEI side reaction layer (which clogs the particle pores) caused by the high surface area of the first silicon-based active material, by forming a coating layer that includes the second silicon-based active material described below.

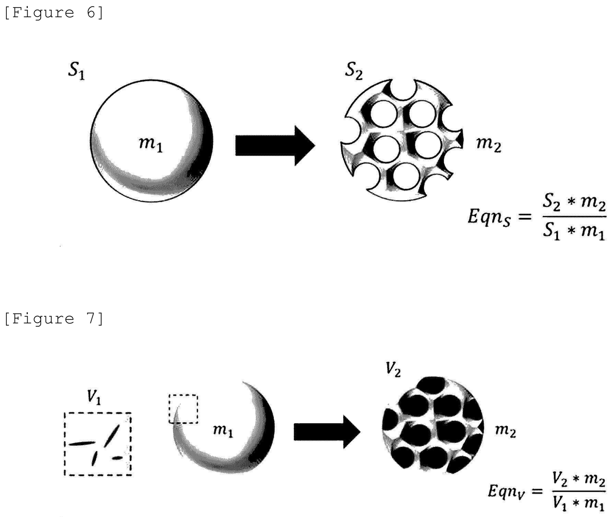

FIG. 6 is a view showing a method for calculating the surface area porosity of the first silicon-based active material, and FIG. 7 is a view showing a method for calculating the volume porosity of the first silicon-based active material.

Specifically, in FIG. 6, $Eqn_s$ is a Formula using a surface area of a particle (the dark border portion in the drawing), $S_1$ refers to a surface area per weight of the first silicon-based active material before pore formation (before etching), $S_2$ refers to a surface area per weight of the first silicon-based active material after pore formation (after etching), $m_1$ refers to a weight before etching, and $m_2$ refers to a weight after etching.

In this case, for both $S_1$ and $S_2$, values measured using the BET method with $N_2$ adsorption are used, and in this case, the surface areas are calculated based on the assumption of the same number of particles. In addition, a factor $(m_2/m_1)$ is calculated to account for the weight loss due to etching.

In FIG. 7, $Eqn_v$ is a Formula using an intra-particle pore volume (the blue portion in the drawing), $V_1$ refers to a pore volume per weight of the first silicon-based active material before pore formation (before etching), $V_2$ refers to a pore volume per weight of the first silicon-based active material after pore formation (after etching), $m_1$ refers to a weight before etching, and $m_2$ refers to a weight after etching.

In this case, for both $V_1$ and $V_2$, values measured using the BET method with $N_2$ adsorption are used, and in this case, and the pore volume ratio per particle number is calculated based on the assumption of the same number of particles, and then corrected and calculated using the mass ratio $(m_2/m_1)$ before and after etching.

In an exemplary embodiment of the present application, the first silicon-based active material may include one or more selected from the group consisting of $SiO_x$ (x=0) and $SiO_x$ (0 < x < 2), and may include 70 parts by weight or more of the $SiO_x$ (x=0) based on 100 parts by weight of the first silicon-based active material.

In an exemplary embodiment of the present application, the first silicon-based active material may include $SiO_x$ (x=0), and may include 70 parts by weight or more of the $SiO_x$ (x=0) based on 100 parts by weight of the first silicon-based active material.

In another exemplary embodiment, the $SiO_x$ (x=0) may be included in an amount of 70 parts by weight or more, preferably 80 parts by weight or more, and more preferably 90 parts by weight or more, and 100 parts by weight or less, preferably 99 parts by weight or less, and more preferably 95 parts by weight or less based on 100 parts by weight of the first silicon-based active material.

In an exemplary embodiment of the present application, pure silicon (Si) particles may be particularly used as the first silicon-based active material. Using pure silicon (Si) particles as the first silicon-based active material may mean that, based on 100 parts by weight of the total first silicon-based active material as described above, pure Si particles ($SiO_x$ (x=0)) that are not combined with other particles or elements are included within the above range.

In an exemplary embodiment of the present application, the first silicon-based active material may be made of silicon-based particles having 100 parts by weight of $SiO_x$ (x=0) based on 100 parts by weight of the silicon-based active material.

The present application includes a negative electrode active material including a first silicon-based active material with pores and a coating layer provided on a surface of the first silicon-based active material, in which the coating layer includes a second silicon-based active material, and a crystal grain size of the second silicon-based active material may be 20 nm or greater and 200 nm or less.

In an exemplary embodiment of the present application, the second silicon-based active material may be included in an amount of 50 parts by weight or more, preferably 80 parts by weight or more, and more preferably 90 parts by weight or more, and 100 parts by weight or less, based on 100 parts by weight of the coating layer.

In an exemplary embodiment of the present application, the coating layer may be made of the second silicon-based active material. That is, when the second silicon-based active material is included in an amount of 100 parts by weight based on 100 parts by weight of the coating layer, the coating layer may be described as being made of the second silicon-based active material.

In the present application, the negative electrode active material includes the first silicon-based active material with pores as a core and may be formed by surrounding the core with the coating layer.

As described above, the surface of the first silicon-based active material is formed with the coating layer as described above, which suppresses the SEI layer side reaction of the porous first silicon-based active material, thereby improving the initial efficiency.

In an exemplary embodiment of the present application, the second silicon-based active material may include one or more selected from the group consisting of $SiO_x$ (x=0) and $SiO_x$ (0 < x < 2), and may include 70 parts by weight or more of the $SiO_x$ (x=0) based on 100 parts by weight of the second silicon-based active material.

In an exemplary embodiment of the present application, the second silicon-based active material may include $SiO_x$ (x=0), and may include 70 parts by weight or more of the $SiO_x$ (x=0) based on 100 parts by weight of the second silicon-based active material.

In another exemplary embodiment, the $SiO_x$ (x=0) may be included in an amount of 70 parts by weight or more, preferably 80 parts by weight or more, and more preferably 90 parts by weight or more, and 100 parts by weight or less, preferably 99 parts by weight or less, and more preferably 95 parts by weight or less based on 100 parts by weight of the second silicon-based active material.

In an exemplary embodiment of the present application, pure silicon (Si) particles may be particularly used as the second silicon-based active material. Using pure silicon (Si) particles as the second silicon-based active material may mean that, based on 100 parts by weight of the total second silicon-based active material as described above, pure Si particles ($SiO_x$ (x=0)) that are not combined with other particles or elements are included within the above range.

In an exemplary embodiment of the present application, the second silicon-based active material may be made of silicon-based particles having 100 parts by weight of $SiO_x$ (x=0) based on 100 parts by weight of the silicon-based active material.

In an exemplary embodiment of the present application, a crystal grain size of the second silicon-based active material may be 20 nm or greater and 200 nm or less.

In another exemplary embodiment, the crystal grain size of the second silicon-based active material may be 20 nm or greater and 200 nm or less, preferably 22 nm or greater and 180 nm or less, more preferably 25 nm or greater and 150 nm or less, 30 nm or greater and 130 nm or less, or 40 nm or greater and 110 nm or less.

The second silicon-based active material has the crystal grain size described above, and the crystal grain size of the second silicon-based active material can be adjusted by changing process conditions in the manufacturing process described below. In this case, when the above range is satisfied, the crystal grain boundaries are widely distributed, and thus, the lithium ions can be uniformly intercalated during intercalating of lithium ions, thereby reducing the stress applied during intercalating of lithium ions into the silicon particles, and accordingly, mitigating breakage of the particles. As a result, characteristics capable of improving the service life stability of the negative electrode are obtained. If the crystal grain size exceeds the above range, the crystal grain boundaries within the particles are narrowly distributed, and in this case, lithium ions are non-uniformly intercalated into the particles, leading to large stress during the intercalating of ions, and accordingly, breakage of particles.

In an exemplary embodiment of the present application, there is provided the negative electrode active material in which the second silicon-based active material includes a crystal structure with a crystal grain distribution of 20 nm or greater and 200 nm or less, and an area ratio of the crystal structure is 5% or less based on a total area of the second silicon-based active material.

In another exemplary embodiment, the area ratio of the crystal structure may be 5% or less, 3% or less, and 0.1% or higher based on the total area of the second silicon-based active material.

That is, the second silicon-based active material according to the present application has the crystal grain size of 200 nm or less, with each crystal structure being formed small in size and satisfying the above-mentioned area ratio. Accordingly, the distribution of the crystal grain boundaries may be widened, and accordingly, the above-described effects may be exhibited.

In an exemplary embodiment of the present application, there is provided the negative electrode active material in which the number of crystal structures included in the second silicon-based active material is 20 or more.

In another exemplary embodiment, the number of crystal structures included in the second silicon-based active material may fall within a range of 20 or more, 30 or more, or 35 or more, and 60 or less, or 50 or less.

That is, as described above, when the second silicon-based active material has a crystal grain size within the above range, and also has the number of crystal structures within the above range, the strength of the silicon-based active material itself falls within an appropriate range, enabling flexibility when included in an electrode and efficiently suppressing volume expansion.

In the present application, the crystal grain refers to a crystal particle in a metal or material, which is a collection of microscopically irregular shapes, and the crystal grain size may refer to a diameter of the observed crystal grain particle. That is, in the present application, the crystal grain size refers to a size of a domain that shares the same crystal orientation within a particle, and is a different concept from the particle size or particle diameter that represents a size of a material.

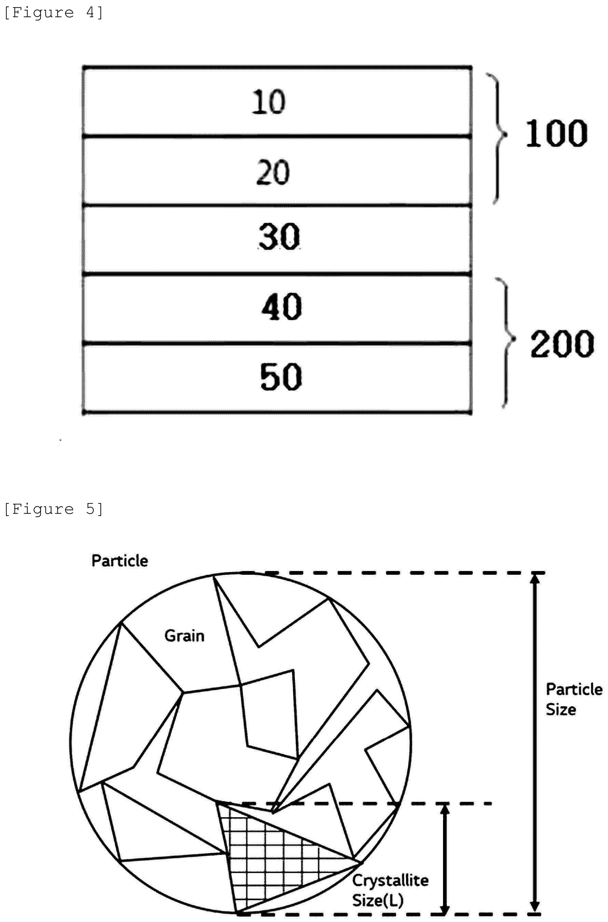

In an exemplary embodiment of the present application, the crystal grain size may be calculated as a value of full width at half maximum (FWHM) through XRD analysis. Specifically, it can be seen in FIG. 5 how to calculate the crystal grain size. The crystallite size (=crystal grain size (L)) described in FIG. 5 is measured through XRD analysis, and the crystal grain size can be determined through the Debey-Scherrer equation, which shows that FWHM and crystal grain size are inversely proportional. The Debey-Scherrer equation is as shown in Formula 1-1 below.

[Formula 1-1]

$$FWHM = (K\lambda) / (L\cos\theta)$$

in Formula 1-1,
L is the crystal grain size, K is a constant, $\theta$ is a Bragg angle, and $\lambda$ refers to a wavelength of X-ray.

In addition, the shapes of the crystal grains are diverse and can be measured in three dimensions. In general, the size of the crystal grain can be measured by a generally used circle method or diameter measurement method, but no such limitation is intended.

In the diameter measurement method, the size of the crystal grain can be measured by drawing 5 to 10 parallel lines, each of which has a length of L mm, on a microscope photograph of a target particle, counting the number of crystal grains z on each line, and averaging them. In this case, only crystal grains that are wholly included on the line are counted, and crystal grains that are partially put on (laid across) the line are excluded. When the number of lines is P and the magnification is V, the average crystal grain size can be calculated by Formula 1-2 below.

$$[Formula\ 1\text{-}2]$$

$$Dm\ =\ (L*P*10^3)/(zV)\ \ (\mu m)$$

In addition, the circle method is a method in which a circle with a predetermined diameter is drawn on a micrograph of a target particle, and then an average area of crystal grains is calculated by the number of crystal grains within the circle and the number of crystal grains laid across the boundary line, and the average area can be calculated by the following Formula 1-3.

$$[Formula\ 1\text{-}3]$$

$$Fm\ =\ (Fk\ *\ 10^6)/((0.67n\ +\ z)\ V^2)\ \ (\mu m^2)$$

In Formula 1-3, Fm is an average crystal grain area, Fk is a measurement area on the photograph, z is the number of crystal grains within a circle, n is the number of crystal grains laid across the circle arc, and V is a magnification of a microscope.

In an exemplary embodiment of the present application, the second silicon-based active material may include silicon-based particles with a particle size distribution of 0.01 $\mu$m or greater and 30 $\mu$m or less.

The fact that the second silicon-based active material includes silicon-based particles with a particle size distribution of 0.01 $\mu$m or greater and 30 $\mu$m or less means that it includes a plurality of individual silicon-based particles with particle sizes within the above range, and in this case, the number of silicon-based particles included is not limited.

When the silicon-based particle is spherical, the particle size thereof can be expressed as its diameter. However, even when the silicon-based particle has a shape other than spherical, the particle size can be measured in contrast to the case of the spherical shape, and the particle size of the individual silicon-based particle can be measured by a method that is generally known in the art.

Note that an average particle diameter (D50 particle size) of the second silicon-based active material of the present invention may be 1 $\mu$m or greater and 10 $\mu$m or less, specifically 2 $\mu$m to 8 $\mu$m, and more specifically 3 $\mu$m to 8 $\mu$m. When the average particle diameter falls within the above range, a specific surface area of the particles falls within a suitable range, resulting in formation of the viscosity of the negative electrode slurry within an appropriate range. Accordingly, the particles constituting the negative electrode slurry are smoothly dispersed. In addition, when the size of the silicon-based active material has a value equal to or greater than the lower limit value of the range, a contact area between the silicon particles and the conductive material is excellent due to the composite made of the conductive material and the binder in the negative electrode slurry, so that a possibility of sustaining the conductive network increases, resulting in an increase in the capacity retention rate. Note that, when the average particle diameter falls within the above range, excessively large silicon particles are excluded, resulting in formation of a smooth surface of the negative electrode. Accordingly, a phenomenon of current density non-uniformity during charging and discharging can be prevented.

In the present application, there is provided the negative electrode active material in which the crystal grain size of the second silicon-based active material is 20 nm or greater and 200 nm or less, and an average particle diameter (D50) of the second silicon-based active material is 1 $\mu$m or greater and 10 $\mu$m or less.

In an exemplary embodiment of the present application, there is provided the negative electrode active material in which the average particle diameter (D50) of the negative electrode active material is 3 $\mu$m or greater and 15 $\mu$m or less.

In particular, the second silicon-based active material according to the present application has a controlled average particle diameter (D50) and crystal grain size. It is generally known that it is easy to secure a pathway for lithium ions when a silicon-based active material with a large average particle diameter is used. However, as the average particle diameter increases, the adhesion to the negative electrode current collector layer decreases, leading to a rapid deterioration in service life characteristics. Accordingly, when an active material including a silicon-based active material with a small average particle diameter (D50) is simply applied, service life performance is secured, but it is difficult to secure a pathway for lithium ions, resulting in an increase in resistance.

In the present application, in view of the above problems, the average particle diameter (D50) of the second silicon-based active material is adjusted to the above range to secure the service life characteristics, and at the same time, the crystal grain size of the silicon-based particles is adjusted as described above so that the crystal grain boundaries are widely distributed, and thus, the lithium ions can be uniformly intercalated during intercalating of lithium ions, thereby reducing the stress applied during intercalating of lithium ions into the silicon particles, and accordingly, reducing breakage of the particles. As a result, the service life stability of the negative electrode can be further improved.

In an exemplary embodiment of the present application, the first silicon-based active material generally has a characteristic BET specific surface area. The BET specific surface area of the silicon-based active material is preferably 0.01 to 150 m$^2$/g, more preferably 0.1 to 100 m$^2$/g, particularly preferably 0.2 to 80 m$^2$/g, and most preferably 0.2 to 18 m$^2$/g. The BET specific surface area is measured in accordance with DIN 66131 (using nitrogen). In an exemplary embodiment of the present application, there is provided the negative electrode active material in which a specific surface area of the negative electrode active material is 10 m$^2$/g or less.

The specific surface area of the negative electrode active material may be 8 m$^2$/g or less, 6 m$^2$/g or less, or 4 m$^2$/g or less, and 0.5 m$^2$/g or greater, or 0.7 m$^2$/g or greater.

That is, as described above, the surface area of the first silicon-based active material is increased through pore formation. When the surface area is increased, the pores become clogged due to direct exposure to the electrolyte. However, the surface area is adjusted by forming the coating layer as described above, which allows the phenomenon of pore clogging to be controlled even when the reaction progresses, leading to improved service life performance.

The surface area of the negative electrode active material can be expressed as S_total, and specifically, it means the surface area of the entire negative electrode active material in which the porous first silicon-based active material is coated with another second silicon-based active material.

In an exemplary embodiment of the present application, the first and second silicon-based active materials may be present in, for example, a crystalline or amorphous form, and are preferably not porous. The silicon-based particles are preferably spherical or fragment-shaped particles. Alternatively, but less preferably, the silicon-based particles may also have a fiber structure or be present in the form of a silicon-containing film or coating.

In an exemplary embodiment of the present application, the first and second silicon-based active materials may have a non-spherical shape and its sphericity (circularity) is, for example, 0.9 or less, for example, 0.7 to 0.9, for example, 0.8 to 0.9, for example, 0.85 to 0.9.

In the present application, the sphericity is determined by Formula 1-A below, in which A is an area and P is a boundary line.

$$[\text{Formula 1-A}]$$

$$4\pi A/P^2$$

In the present application, there is provided the negative electrode active material in which a thickness of the coating layer satisfies Formula 3 below.

$$0.1 \leq \text{thickness of coating layer/diameter in cross- section of negative electrode active material particle} \leq 0.6 \qquad [\text{Formula 3}]$$

The coating layer is provided on the surface of the first silicon-based active material and is deposited on the outer layer of the structure. In a cross-sectional analysis, the coating layer may appear in the form of a shell rather than a porous form.

That is, the coating layer has a structure that surrounds the entire surface of the first silicon-based active material with pores, has a structure of the negative electrode active material different from a structure having silicon crystal grains in the surface of the silicon-based active material, and includes the second silicon-based active material with crystal grains within a certain range, thereby preventing the first silicon-based active material with pores from being directly exposed to the electrolyte.

On the other hand, when silicon crystal grains are positioned in the surface of the first silicon-based active material, deposition of particles may occur throughout the structure with the porous material, resulting in only the porous structure, not the shell, being observed in a cross-sectional analysis.

In Formula 3 above, the thickness of the coating layer and the diameter in the cross-section of the negative electrode active material particle are calculated by selecting a particle in the SEM cross-section image, measuring a thickness of the shell shape (a layer in which a porous shape is not observed when checking the particle cross-section), and dividing the value by the diameter in the cross-section of the particle.

In the present application, Formula 3 above may be 0.1 or greater, 0.12 or greater, or 0.25 or greater, and 0.6 or less, 0.57 or less, 0.52 or less, 0.45 or less, or 0.42 or less. If the above range is satisfied, even when the first silicon-based active material has an increased surface area resulting from the pore formation, the phenomenon of pore clogging caused by side reaction layer formation due to direct exposure to the electrolyte can be controlled, thereby improving the service life performance.

In an exemplary embodiment of the present application, there is provided the negative electrode active material in which the first silicon-based active material and the second silicon-based active material are different from each other.

In an exemplary embodiment of the present application, there is provided a negative electrode composition including the negative electrode active material described above, a negative electrode conductive material, and a negative electrode binder.

In an exemplary embodiment of the present application, there is provided the negative electrode composition in which the negative electrode active material is included in an amount of 40 parts by weight or more based on 100 parts by weight of the negative electrode composition.

In another exemplary embodiment, the negative electrode active material may be included in an amount of 40 parts by weight or more, preferably 60 parts by weight or more, more preferably 65 parts by weight or more, and further preferably 70 parts by weight or more, and 95 parts by weight or less, preferably 90 parts by weight or less, and more preferably 85 parts by weight or less, based on 100 parts by weight of the negative electrode composition.

The negative electrode composition according to the present specification uses the second silicon-based active material as the coating layer satisfying a specific crystal grain size, which can control the volume expansion rate during the charging and discharging processes even when the negative electrode active material with a significantly high capacity is used within the above range. As a result, the performance of the negative electrode is not deteriorated even within the above range, and excellent output characteristics during charging and discharging are achieved.

In the related art, it is general to use only graphite-based compounds as the negative electrode active material. However, in recent years, as the demand for high-capacity batteries is increasing, attempts to mix and use silicon-based active materials are increasing in order to increase capacity. However, in the case of a silicon-based active material, even when the characteristics of the silicon-based active material itself are adjusted as described above, the volume may rapidly expand during charging and discharging, thereby causing some problems of damaging the conductive path formed in the negative electrode active material layer.

Therefore, in an exemplary embodiment of the present application, the negative electrode conductive material may include one or more selected from the group consisting of a point-like conductive material, a planar conductive material and a linear conductive material.

In an exemplary embodiment of the present application, the point-like conductive material refers to a point-like or spherical conductive material that may be used for improving conductivity of the negative electrode and has conductivity without causing a chemical change. Specifically, the point-like conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 $m^2/g$ or greater and 70 $m^2/g$ or less, preferably 45 $m^2/g$ or greater and 65 $m^2/g$ or less, and more preferably 50 $m^2/g$ or greater and 60 $m^2/g$ or less.

In an exemplary embodiment of the present application, a content of the functional group (volatile matter) of the point-like conductive material may fall within a range of 0.01% or more and 1% or less, preferably 0.01% or more and 0.3% or less, and more preferably 0.01% or more and 0.1% or less.

In particular, when the content of the functional group of the point-like conductive material satisfies the above range, a functional group is present on a surface of the point-like conductive material, so that the point-like conductive material can be smoothly dispersed in a solvent when water is used as the solvent. In particular, in the present invention, as the specific silicon-based active material is used, a functional group content of the point-like conductive material can be lowered, which exhibits an excellent effect in improving dispersibility.

In an exemplary embodiment of the present application, the point-like conductive material having the content of the functional group within the range described above is included together with the silicon-based active material, and the content of the functional group can be adjusted according to a degree of heat treatment of the point-like conductive material.

In an exemplary embodiment of the present application, a particle diameter of the point-like conductive material may be 10 nm to 100 nm, preferably 20 nm to 90 nm, and more preferably 20 nm to 60 nm.

In an exemplary embodiment of the present application, the negative electrode conductive material may include a planar conductive material.

The planar conductive material improves conductivity by increasing surface contact between silicon-based particles in the negative electrode, and at the same time, can serve to suppress disconnection of the conductive path due to the volume expansion. The planar conductive material may be expressed as a plate-like conductive material or a bulk-type conductive material.

In an exemplary embodiment of the present application, the planar conductive material may include at least one selected from the group consisting of plate-like graphite, graphene, graphene oxide, and graphite flake, and preferably may be plate-like graphite.

In an exemplary embodiment of the present application, an average particle diameter (D50) of the planar conductive material may be 2 to 7 $\mu$m, specifically 3 to 6 $\mu$m, and more specifically 3.5 to 5 $\mu$m. When the above range is satisfied, the sufficient particle size results in easy dispersion without causing an excessive increase in viscosity of the negative electrode slurry. Therefore, the dispersion effect is excellent when performing dispersion using the same equipment and time.

In an exemplary embodiment of the present application, the planar conductive material may have a D10 of 0.5 $\mu$m or greater and 1.5 $\mu$m or less, a D50 of 2.5 $\mu$m or greater and 6.0 $\mu$m or less, and a D90 of 7.0 $\mu$m or greater and 15.0 $\mu$m or less, and when the above ranges are satisfied, the sufficient particle size allows for easy dispersion without causing an excessive increase in the viscosity of the negative electrode slurry.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 1 $m^2$/g or greater.

In another exemplary embodiment, the planar conductive material may have a BET specific surface area of 1 $m^2$/g or greater and 500 $m^2$/g or less, preferably 5 $m^2$/g or greater and 300 $m^2$/g or less, and more preferably 5 $m^2$/g or greater and 250 $m^2$/g or less.

For the planar conductive material of the present application, a planar conductive material with a high specific surface area or a planar conductive material with a low specific surface area may be used.

In another exemplary embodiment, the planar conductive material is a planar conductive material with a high specific surface area, and the BET specific surface area may fall within a range of 50 $m^2$/g or greater and 500 $m^2$/g or less, preferably 80 $m^2$/g or greater and 300 $m^2$/g or less, and more preferably 100 $m^2$/g or greater and 300 $m^2$/g or less.

In another exemplary embodiment, the planar conductive material is a planar conductive material with a low specific surface area, and the BET specific surface area may fall within a range of 1 $m^2$/g or greater and 40 $m^2$/g or less, preferably 5 $m^2$/g or greater and 30 $m^2$/g or less, and more preferably 5 $m^2$/g or greater and 25 $m^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductive material or a semiconductive material may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, there is provided the negative electrode composition in which the negative electrode conductive material is included in an amount of 10 parts by weight or more and 40 parts by weight or less based on 100 parts by weight of the negative electrode composition.

In another exemplary embodiment, the negative electrode conductive material may be included in an amount of 0.1 part by weight or more and 40 parts by weight or less, preferably 0.2 part by weight or more and 30 parts by weight or less, more preferably 0.4 part by weight or more and 25 parts by weight or less, and most preferably 0.4 part by weight or more and 10 parts by weight or less based on 100 parts by weight of the negative electrode composition.

In an exemplary embodiment of the present application, there is provided the negative electrode composition in which the negative electrode conductive material includes a planar conductive material and a linear conductive material.

In an exemplary embodiment of the present application, there is provided the negative electrode composition in which the negative electrode conductive material includes 80 parts by weight or more and 99.9 parts by weight or less of the planar conductive material and 0.1 part by weight or more and 20 parts by weight or less of the linear conductive material based on 100 parts by weight of the negative electrode conductive material.

In another exemplary embodiment, the negative electrode conductive material may include 80 parts by weight or more and 99.9 parts by weight or less, preferably 85 parts by weight or more and 99.9 parts by weight or less, and more preferably 95 parts by weight or more and 98 parts by weight or less of the planar conductive material based on 100 parts by weight of the negative electrode conductive material.

In another exemplary embodiment, the negative electrode conductive material may include 0.1 part by weight or more and 20 parts by weight or less, preferably 0.1 part by weight or more and 15 parts by weight or less, and more preferably 2 parts by weight or more and 5 parts by weight or less of the linear conductive material based on 100 parts by weight of the negative electrode conductive material.

In an exemplary embodiment of the present application, the negative electrode conductive material includes both the planar conductive material and the linear conductive material, each satisfying the composition and ratio described above, so the service life characteristics of a conventional lithium secondary battery are not significantly affected, and particularly, the inclusion of both the planar conductive material and the linear conductive material increases the number of points where charging and discharging are possible, leading to excellent output characteristics at a high C-rate and a reduction in gas generation at high temperatures.

In an exemplary embodiment of the present application, the negative electrode conductive material may be composed of a linear conductive material.

In particular, when a linear conductive material is used alone, the electrode tortuosity, which is a problem of silicon-based negative electrodes, can be simplified, making it possible to improve the electrode structure, and accordingly, to reduce the migration resistance of lithium ions in the electrode.

In an exemplary embodiment of the present application, when the negative electrode conductive material includes a linear conductive material alone, the linear conductive material may be included in an amount of 0.1 part by weight or more and 5 parts by weight or less, preferably 0.2 part by weight or more and 3 parts by weight or less, and more preferably 0.4 part by weight or more and 1 part by weight or less based on 100 parts by weight of the negative electrode composition.

The negative electrode conductive material according to the present application has a completely different configuration from that of a positive electrode conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the planar conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the planar conductive material that is used as the negative electrode conductive material is a material having a planar or plate-like shape, and may be expressed as plate-like graphite. That is, the planar conductive material is a material that is included in order to maintain a conductive path in the negative electrode active material layer, and refers to a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

That is, in an exemplary embodiment of the present application, artificial graphite or natural graphite, which is a carbon-based active material, has a point-like shape, and a BET specific surface area thereof may satisfy a range of 0.1 $m^2/g$ or greater and 4.5 $m^2/g$ or less. In addition, plate-like graphite, which is a planar conductive material, has a planar shape, and a BET specific surface area thereof may be 5 m$^2$/g or greater.

In an exemplary embodiment of the present application, the negative electrode binder may include at least one selected from the group consisting of polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and a material in which hydrogen of these is substituted with Li, Na, Ca, or the like, and may also include various copolymers thereof.

The negative electrode binder according to an exemplary embodiment of the present application serves to hold the active material and the conductive material in order to prevent distortion and structural deformation of the negative electrode structure during volume expansion and relaxation of the silicon-based active material. When such roles are satisfied, all of the general binders can be applied. Specifically, an aqueous binder may be used, and more specifically, a PAM-based binder may be used.

In an exemplary embodiment of the present application, the negative electrode binder may be included in an amount of 30 parts by weight or less, preferably 25 parts by weight or less, and more preferably 20 parts by weight or less, and 5 parts by weight or more, and 10 parts by weight or more based on 100 parts by weight of the negative electrode composition.

An exemplary embodiment of the present application provides a method for manufacturing a negative electrode active material, the method including the steps of: etching a silicon raw material to prepare a first silicon-based active material with pores; and depositing a silicon-containing gas on the first silicon-based active material to form a coating layer provided on a surface of the first silicon-based active material, wherein the coating layer includes a second silicon-based active material, and a crystal grain size of the second silicon-based active material is 20 nm or greater and 200 nm or less.

In one example, the silicon-containing gas may be a silane gas.

In an exemplary embodiment of the present application, there is provided the method for manufacturing a negative electrode active material in which the silicon-containing gas includes one or more gases selected from monosilane, dichlorosilane, and trichlorosilane.

According to an example, the silane gas may include one or more gas selected from monosilane, dichlorosilane, and trichlorosilane, and specifically, may be a trichlorosilane gas.

In an exemplary embodiment of the present application, the step of depositing a silicon-based active material on a substrate by chemically reacting a silane gas may be performed under a pressure condition of 10 Pa to 150 Pa. Due to such a low pressure, a silicon growth rate is reduced, and as a result, formation of small crystal grains can be achieved. The depositing may be performed under a temperature condition of 100°C or higher, specifically 500°C or higher, preferably 800°C or higher, more preferably 800°C to 1300°C, or 800°C to 1100°C. This is a lower temperature than the conventional gas atomizing method of heating Si to 1600°C or higher for melting.

An exemplary embodiment of the present application provides a negative electrode for a lithium secondary battery including: a negative electrode current collector layer, and a negative electrode active material layer provided on one surface or both surfaces of the negative electrode current collector layer, wherein the negative electrode active material layer includes the negative electrode composition according to the present application or a cured product thereof.

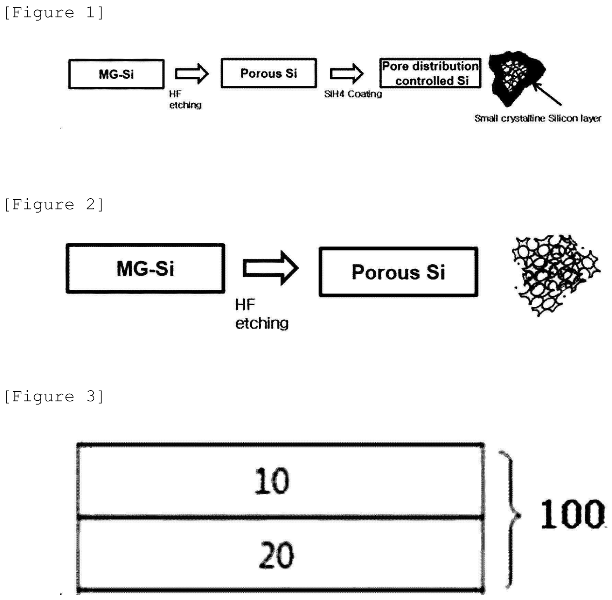

FIG. 3 is a view showing a stack structure of a negative electrode for a lithium secondary battery according to an exemplary embodiment of the present application. Specifically, a negative electrode 100 for a lithium secondary battery can be seen which includes a negative electrode active material layer 20 on one surface of a negative electrode current collector layer 10. FIG. 3 shows that the negative electrode active material layer is formed on one surface of the negative electrode current collector layer, but the negative electrode active material layer may also be formed on both surfaces of the negative electrode current collector layer.

In an exemplary embodiment of the present application, the negative electrode for a lithium secondary battery may be formed by applying a negative electrode slurry including the negative electrode composition to one surface or both surfaces of the negative electrode current collector layer, and drying.

In this case, the negative electrode slurry may include the negative electrode composition described above, and a slurry solvent.

In an exemplary embodiment of the present application, a solid content of the negative electrode slurry may fall within a range of 5% or more and 40% or less.

In another exemplary embodiment, the solid content of the negative electrode slurry may fall within a range of 5% or more and 40% or less, preferably 7% or more and 35% or less, and more preferably 10% or more and 30% or less.

The solid content of the negative electrode slurry may refer to a content of the negative electrode composition included in the negative electrode slurry, and may refer to a content of the negative electrode composition based on 100 parts by weight of the negative electrode slurry.

When the solid content of the negative electrode slurry satisfies the above range, the viscosity is appropriate during formation of the negative electrode active material layer, so that particle agglomeration of the negative electrode composition is minimized to efficiently form the negative electrode active material layer.

In an exemplary embodiment of the present application, the slurry solvent can be used without limitation as long as it can dissolve the negative electrode composition, and specifically, water or NMP may be used.

In an exemplary embodiment of the present application, the negative electrode current collector layer generally has a thickness of 1 $\mu$m to 100 $\mu$m. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present application, there is provided the negative electrode for a lithium secondary battery in which a thickness of the negative electrode current collector layer is 1 $\mu$m or greater and 100 $\mu$m or less and a thickness of the negative electrode active material layer is 5 $\mu$m or greater and 500 $\mu$m or less.

However, the thickness may be variously modified depending on a type and a use of negative electrode used, and is not limited thereto.

In an exemplary embodiment of the present application, a porosity of the negative electrode active material layer may fall within a range of 10% or greater and 60% or less.

In another exemplary embodiment, the porosity of the negative electrode active material layer may fall within a range of 10% or greater and 60% or less, preferably 20% or greater and 50% or less, and more preferably 30% or greater and 45% or less.

The porosity varies depending on compositions and contents of the silicon-based active material, the conductive material, and the binder included in the negative electrode active material layer, and in particular, satisfies the range described above when the silicon-based active material and the conductive material are included in the specific compositions and contents according to the present application, so that the electrode has electric conductivity and resistance within appropriate ranges.

An exemplary embodiment of the present application provides a lithium secondary battery including a positive electrode; the negative electrode for a lithium secondary battery according to the present application; a separator provided between the positive electrode and the negative electrode; and an electrolyte.

FIG. 4 is a view showing a stack structure of a lithium secondary battery according to an exemplary embodiment of the present application. Specifically, a negative electrode 100 for a lithium secondary battery including a negative electrode active material layer 20 on one surface of a negative electrode current collector layer 10 can be seen, a positive electrode 200 for a lithium secondary battery including a positive electrode active material layer 40 on one surface of a positive electrode current collector layer 50 can be seen, and the negative electrode 100 for a lithium secondary battery and the positive electrode 200 for a lithium secondary battery are formed in a stack structure with a separator 30 interposed therebetween.

The secondary battery according to an exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4 (0 \leq c1 \leq 0.33)$, $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and

Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder, together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidenefluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture two or more thereof may be used.

The separator serves to separate the negative electrode and the positive electrode and to provide a migration pathway for lithium ions, in which any separator may be used as the separator without particular limitation as long as it is typically used in a secondary battery, and particularly, a separator having high moisture-retention ability for an electrolyte as well as a low resistance to the migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving service life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

Mode for Invention

**<Preparation Examples>**

**<Preparation of Examples 1 to 9>**

A SiO$_x$ raw material was liquefied by applying heat, which was then subjected to an electrochemical reaction to produce MG-Si (Metallurgical Grade Silicon). Thereafter, MG-Si was crushed and classified to control the desired particle size and particle size distribution, which was then treated with strong acid (HF, H$_2$SO$_4$) or a strong base (NaOH) to form pores within the silicon particles, and the porosity is shown in Table 1 below.

Subsequently, the fluid was allowed to flow inside the reactor so that the particles could flow, and then a silicon-containing gas was allowed to flow while simultaneously applying heat, thereby producing a negative electrode active material having a double layer in which a silicon layer (Si) with polycrystallinity within the conventional particles was formed. In this case, the crystal grain size (nm) of the silicon layer (Si), i.e., the crystal grain size (nm) of the second silicon-based active material, is shown in Table 1 below.

**<Preparation of Example 10>**

A SiO$_x$ raw material is liquefied by applying heat, which is then subjected to an electrochemical reaction to produce MG-Si (Metallurgical Grade Silicon). Thereafter, MG-Si was crushed and classified to control the desired particle size and particle size distribution, which was then treated with strong acid (HF, H$_2$SO$_4$) or a strong base (NaOH) to form pores within the silicon particles, and the porosity is shown in Table 1 below.

Subsequently, the fluid was allowed to flow inside the reactor so that the particles could flow, and then a silicon-containing gas was allowed to flow while simultaneously applying heat, thereby producing a negative electrode active material having a double layer in which a silicon layer (Si) with polycrystallinity within the conventional particles was formed. Then, heat was applied under inert gas conditions to control the crystal grain size of the active material, thereby increasing the crystal grain size of the active material. In this case, the crystal grain size (nm) of the silicon layer (Si), i.e., the crystal grain size (nm) of the second silicon-based active material, is shown in Table 1 below.

**<Preparation of Comparative Examples 1 to 3>**

A SiO$_x$ raw material is liquefied by applying heat, which is then subjected to an electrochemical reaction to produce MG-Si (Metallurgical Grade Silicon). Thereafter, MG-Si was crushed and classified to control the desired particle size and particle size distribution, which was then treated with strong acid (HF, H$_2$SO$_4$) or a strong base (NaOH) to form pores within the silicon particles, and the porosity is shown in Table 1 below.

**<Preparation of Comparative Examples 4 to 6>**

After preparing Comparative Example 3, the fluid was allowed to flow inside the reactor so that the particles could flow, and then a silicon-containing gas was allowed to flow while simultaneously applying heat, thereby producing negative electrode active materials having a double layer in which a silicon layer (Si) with polycrystallinity within the conventional particles was formed, which are Comparative Examples 4 and 5.

In addition, in order to confirm a structure with more pores than Comparative Example 3, Comparative Example 6 was produced using a different synthesis method from Comparative Example 3. Silicon and metal alloy particles were treated with acid to form a porous silicon structure. Thereafter, a silicon-containing gas was allowed to flow while simultaneously applying heat, thereby producing a negative electrode active material in which a silicon layer (Si) with polycrystallinity within the conventional particles was formed on the Si surface, which is Comparative Example 6.

In this case, the crystal grain size (nm) of the silicon layer (Si), i.e., the crystal grain size (nm) of the second silicon-based active material, was as shown in Table 1 below.

[Table 1]

| | D50 (first silicon-based active material) | D50 (negative electrode active material) | D50 (negative electrode active material-first silicon-based active material) | Silicon weight (after etching)/silicon weight (before etching) | Formula 2 | Formula 1 | Crystal grain size (nm) of second silicon-based active material | S_Total | Thickness of coating layer/diameter in cross-section of negative electrode active material particle |
|---|---|---|---|---|---|---|---|---|---|
| Comparative Example 1 | 1 | - | - | 0.51 | 1.32 | 9.84 | - | 22.73 | - |
| Comparative Example 2 | 3 | - | - | 0.40 | 5.31 | 6.22 | - | 8.74 | - |
| Comparative Example 3 | 5 | - | - | 0.37 | 6.32 | 1.32 | - | 4.73 | - |
| Comparative | 5 | 10 | 5 | 0.51 | 6.32 | 1.32 | 220 | 1.30 | 0.23 |

| | | | | | | | | | |
|---|---|---|---|---|---|---|---|---|---|
| Example 4 | | | | | | | | | |
| Comparative Example 5 | 5 | 10 | 5 | 0.51 | 6.32 | 1.32 | 10 | 1.27 | 0.23 |
| Comparative Example 6 | 5 | 5 | 0 | 0.27 | 0.54 | 15.28 | 20 | 35.7 | - |
| Example 1 | 1 | 3 | 2 | 0.51 | 1.32 | 9.84 | 40 | 3.42 | 0.35 |
| Example 2 | 1 | 6 | 5 | 0.51 | 1.32 | 9.84 | 40 | 1.67 | 0.42 |
| Example 3 | 1 | 11 | 10 | 0.51 | 1.32 | 9.84 | 40 | 1.23 | 0.57 |
| Example 4 | 3 | 4 | 1 | 0.40 | 5.31 | 6.22 | 40 | 1.83 | 0.25 |
| Example 5 | 3 | 8 | 5 | 0.40 | 5.31 | 6.22 | 40 | 1.54 | 0.33 |
| Example 6 | 3 | 13 | 10 | 0.40 | 5.31 | 6.22 | 40 | 1.07 | 0.37 |
| Example 7 | 5 | 6 | 1 | 0.37 | 6.32 | 1.32 | 40 | 1.64 | 0.13 |
| Example 8 | 5 | 10 | 5 | 0.51 | 6.32 | 1.32 | 40 | 1.34 | 0.26 |
| Example 9 | 5 | 15 | 10 | 0.40 | 6.32 | 1.32 | 40 | 0.97 | 0.35 |
| Example 10 | 5 | 10 | 5 | 0.51 | 1.32 | 1.32 | 110 | 1.32 | 0.27 |

In Table 1, Formula 1 refers to a ratio of a surface area after the etching process (i.e., the first silicon-based active material after pore formation) to a surface area before the etching process (i.e., the first silicon-based active material before pore formation), and Formula 2 refers to a ratio of a volume after the etching process (i.e., the first silicon-based active material after pore formation) to a volume before the etching process (i.e., the first silicon-based active material before pore formation). Further, in Table 1, the thickness of the coating layer and the diameter in the cross-section of the negative electrode active material particle are calculated by selecting a particle in the SEM cross-section image, measuring a thickness of the shell shape (a layer in which a porous shape is not observed when checking the particle cross-section), and dividing the value by the diameter in the cross-section of the particle.

### <Preparation of Negative Electrode>

A negative electrode slurry was prepared by adding a negative electrode active material including the silicon-based active material in Table 1, a first conductive material and a second conductive material, and polyacrylamide as a binder to distilled water as a solvent for formation of a negative electrode slurry at a weight ratio of 80:10:10 (solid concentration: 28 wt%).

Specifically, the first conductive material was plate-like graphite (specific surface area: 17 $m^2$/g, average particle diameter (D50): 3.5 $\mu$m), and the second conductive material was SWCNT.

As a specific mixing method, the first conductive material, the binder, and water were dispersed at 2,500 rpm for 30 minutes by using a homo mixer, the second conductive material was added and dispersed for 10 minutes, and then the silicon-based active material was added to the dispersion, and the resulting mixture was dispersed at 2500 rpm for 30 minutes to prepare a negative electrode slurry.

The negative electrode slurry was coated on one surface of a copper current collector (thickness: 15 $\mu$m) serving

as a negative electrode current collector layer with a loading amount of 227 mg/50 cm$^2$, which was then roll-pressed and dried in a vacuum oven at 130°C for 10 hours to form a negative electrode active material layer (thickness: 23 μm), resulting in preparation of a negative electrode (thickness of negative electrode: 38 μm, porosity of negative electrode: 40.0%).

**<Preparation of Secondary Battery>**

A positive electrode slurry (solid concentration: 78 wt%) was prepared by adding LiNi$_{0.6}$Co$_{0.2}$Mn$_{0.2}$O$_2$ (average particle diameter (D50): 15 μm) as a positive electrode active material, carbon black (product name: Super C65, manufacturer: Timcal) as a conductive material, and polyvinylidene fluoride (PVdF) as a binder to N-methyl-2-pyrrolidone (NMP) as a solvent for formation of a positive electrode slurry at a weight ratio of 97:1.5:1.5.

The positive electrode slurry was coated onto both surfaces of an aluminum current collector (thickness: 12 μm) serving as a positive electrode current collector with a loading amount of 537 mg/25 cm$^2$, which was then roll-pressed and dried in a vacuum oven at 130°C for 10 hours to form a positive electrode active material layer (thickness: 65 μm), resulting in preparation of a positive electrode (thickness of positive electrode: 77 μm, porosity: 26%).

A lithium secondary battery was manufactured by interposing a polyethylene separator between the positive electrode and the negative electrode of the Examples and the Comparative Examples and injecting an electrolyte.

The electrolyte was obtained by adding vinylene carbonate to an organic solvent, in which fluoroethylene carbonate (FEC) and diethyl carbonate (DEC) were mixed at a volume ratio of 10:90, in an amount of 3 wt% based on a total weight of the electrolyte and adding LiPF$_6$ as a lithium salt to a concentration of 1M.

**<Experimental Example>**

**Experimental Example 1: Cycle life data**

The cycle life of the secondary batteries including the negative electrodes prepared using the negative electrode active materials of the Examples and Comparative Examples was evaluated using an electrochemical charge/discharge tester, and the capacity retention rate was assessed. The in-situ cycle test was conducted on the secondary battery at 4.2-3.0 V 1 C/0.5 C, and during the test, 0.33 C/0.33 C charging/discharging (4.2-3.0 V) was performed every 50 cycles to measure the capacity retention rate.

life retention rate (%) = {(discharge capacity in the Nth cycle)/(discharge capacity in the first cycle)} $\times$ 100

[Table 2]

|  | Life retention rate (%) after 300 cycles |
|---|---|
| Comparative Example 1 | 0 (Sudden drop occurs) |
| Comparative Example 2 | 0 (Sudden drop occurs) |
| Comparative Example 3 | 0 (Sudden drop occurs) |
| Comparative Example 4 | 54 |
| Comparative Example 5 | 0 (Sudden drop occurs) |
| Comparative Example 6 | 0 (Sudden drop occurs) |
| Example 1 | 69 |
| Example 2 | 72 |
| Example 3 | 68 |
| Example 4 | 71 |
| Example 5 | 74 |
| Example 6 | 66 |
| Example 7 | 72 |
| Example 8 | 70 |
| Example 9 | 64 |

(continued)

|  | Life retention rate (%) after 300 cycles |
|---|---|
| Example 10 | 62 |

## Experimental Example 2: Pulse resistance value after 200 cycles

In Experimental Example 1, the capacity retention rate was measured by performing a 0.33 C/0.33 C charge/-discharge (4.2-3.0 V) every 50 cycles during the test, and then the resistance was measured for 30 seconds after discharging with a 2.5C pulse at SOC50 to check the degree of difference in the resistance value after the cycle.

For the evaluation of the resistance increase rate measurement, data at 200 cycles was calculated each, and the results are shown in Table 3 below.

[Table 3]

|  | Resistance after 200 cycles (mohm) (3.0 to 4.2 V range 1C/0.5C) |
|---|---|
| Comparative Example 1 | 2400 |
| Comparative Example 2 | 2273 |
| Comparative Example 3 | 2434 |
| Comparative Example 4 | 1880 |
| Comparative Example 5 | 1840 |
| Comparative Example 6 | 2150 |
| Example 1 | 1316 |
| Example 2 | 1187 |
| Example 3 | 1792 |
| Example 4 | 1203 |
| Example 5 | 1137 |
| Example 6 | 1419 |
| Example 7 | 1192 |
| Example 8 | 1216 |
| Example 9 | 1616 |
| Example 10 | 1326 |

As can be seen from Tables 2 and 3, it was confirmed that when the negative electrode active materials of Examples 1 to 10 of the present invention are used, the initial efficiency can be improved by suppressing the SEI layer side reaction of the first silicon-based active material with pores, and the pores in the first silicon-based active material and the grain boundaries in the surface portion of the second silicon-based active material alleviate the stress caused by the reaction between lithium and silicon, thereby reducing particle breakage and improving service life performance. Comparative Examples 1 to 3 correspond to cases where a silicon-based active material with pores was used alone. In these cases, it was confirmed that, since the porous region was directly exposed to the electrolyte, a rapid decrease in service life performance occurred as the cycle progressed to a certain level, regardless of the particle size. This corresponds to a phenomenon where the pores, which alleviate stress during conventional charging and discharging, become clogged due to the formation of a side reaction layer (SEI Layer) as the cycle progresses.

Even from the resistance values in Table 3, it was confirmed that the resistance increased rapidly compared to before.

In contrast, it was confirmed that in Examples 1 to 10, the rapid decrease in service life performance was improved. This corresponds to an improvement in service life performance by the coating layer (double layer) blocking direct reaction between the porous Si and the electrolyte.

Additionally, in order to confirm the influence of the crystal grain size of the second silicon-based active material, Comparative Examples 4 and 5 were examined. In Comparative Example 4 in which the crystal grains were formed larger than in the Examples, it was confirmed that the service life performance was relatively reduced and the resistance increased. That is, as the crystal grains increased, the layer formed on the surface was broken due to the stress generated during intercalation of lithium, leading to the clogging of pores formed at the surface layer and inside of the first silicon-based active material due to the formation of a side-reactive layer, which resulted in decreased service life performance and increased resistance.

In addition, in Comparative Example 5 in which the crystal grains were formed smaller than in the Examples, the coating layer was not formed to completely cover the surface of the porous first silicon-based active material. Consequently, it was confirmed that the side reactions with the electrolyte could not be suppressed, leading to a rapid decrease in service life performance and a sharp increase in resistance.

Furthermore, in order to confirm the influence of the formation of the coating layer provided on the surface of the first silicon-based active material, i.e., the coating layer including the second silicon-based active material, Comparative Example 6 was examined. In Examples 1 to 10 in which the coating layer was deposited on the outer layer of the structure so as to surround the surface of the first silicon-based active material, it may appear in the form of a shell rather than a porous form in a cross-sectional analysis. However, in Comparative Example 6 in which silicon crystal grains were positioned in the surface of the first silicon-based active material and deposition of particles occurred throughout the structure with the porous material, only the porous structure, not the shell, was observed in a cross-sectional analysis, and thus the thickness of the coating layer relative to the diameter in the cross-section of the negative electrode active material particle could not be measured. In these cases, it was confirmed that the porous region was directly exposed to the electrolyte, leading to the formation of a side reaction layer and the clogging of pores as the cycle progressed. To prevent this, it is necessary to maintain a shell shape in order to preserve the porous structure within the first silicon-based active material, thereby retaining the benefits of porous silicon.

**Claims**

1. A negative electrode active material comprising:

   a first silicon-based active material with pores; and
   a coating layer provided on a surface of the first silicon-based active material,

      wherein the coating layer comprises a second silicon-based active material, and
      wherein a crystal grain size of the second silicon-based active material is 20 nm or greater and 200 nm or less.

2. The negative electrode active material of claim 1, wherein a surface area porosity of the first silicon-based active material satisfies Formula 1.

$$[\text{Formula 1}]$$

$$1.0 \leq Sp \leq 12.0$$

   in Formula 1,
   Sp refers to a surface area of the first silicon-based active material with pores/a surface area of the first silicon-based active material before pore formation.

3. The negative electrode active material of claim 1, wherein a volume porosity of the first silicon-based active material satisfies Formula 2.

$$[\text{Formula 2}]$$

$$1.0 \leq Vp \leq 11.0$$

   Vp refers to a volume of the first silicon-based active material with pores/a volume of the first silicon-based active material before pore formation.

4. The negative electrode active material of claim 1, wherein the first silicon-based active material comprises one or more selected from the group consisting of $SiO_x$ (x=0) and $SiO_x$ (0 < x < 2), and comprises 70 parts by weight or more of the $SiO_x$ (x=0) based on 100 parts by weight of the first silicon-based active material.

5. The negative electrode active material of claim 1, wherein the second silicon-based active material comprises one or more selected from the group consisting of $SiO_x$ (x=0) and $SiO_x$ (0 < x < 2), and comprises 70 parts by weight or more of the $SiO_x$ (x=0) based on 100 parts by weight of the second silicon-based active material.

6. The negative electrode active material of claim 1, wherein the crystal grain size of the second silicon-based active material is 20 nm or greater and 200 nm or less, and an average particle diameter (D50) of the second silicon-based active material is 1 μm or greater and 10 μm or less.

7. The negative electrode active material of claim 1, wherein an average particle diameter (D50) of the negative electrode active material is 3 μm or greater and 15 μm or less.

8. The negative electrode active material of claim 1, wherein the first silicon-based active material and the second silicon-based active material are different from each other.

9. The negative electrode active material of claim 1, wherein a specific surface area of the negative electrode active material is 10 $m^2/g$ or less.

10. The negative electrode active material of claim 1, wherein a thickness of the coating layer satisfies Formula 3.

$$0.1 \leq \text{thickness of coating layer/diameter in cross- section of negative electrode active material particle} \leq 0.6 \qquad \text{[Formula 3]}$$

11. A method for manufacturing a negative electrode active material, the method comprising:

    etching a silicon raw material to prepare a first silicon-based active material with pores; and
    depositing a silicon-containing gas on the first silicon-based active material to form a coating layer provided on a surface of the first silicon-based active material,
    wherein the coating layer comprises a second silicon-based active material, and
    wherein a crystal grain size of the second silicon-based active material is 20 nm or greater and 200 nm or less.

12. The method of claim 11, wherein the silicon-containing gas comprises one or more gases selected from monosilane, dichlorosilane, and trichlorosilane.

13. A negative electrode composition comprising:

    the negative electrode active material of any one of claims 1 to 10;
    a negative electrode conductive material; and
    a negative electrode binder.

14. The negative electrode composition of claim 13, wherein the negative electrode active material is included in an amount of 40 parts by weight or more based on 100 parts by weight of the negative electrode composition.

15. The negative electrode composition of claim 13, wherein the negative electrode conductive material comprises a planar conductive material and a linear conductive material.

16. The negative electrode composition of claim 15, wherein the negative electrode conductive material comprises 80 parts by weight or more and 99.9 parts by weight or less of the planar conductive material and 0.1 part by weight or more and 20 parts by weight or less of the linear conductive material based on 100 parts by weight of the negative electrode conductive material.

17. The negative electrode composition of claim 15, wherein the planar conductive material has a D10 of 0.5 μm or greater and 1.5 μm or less, a D50 of 2.5 μm or greater and 6.0 μm or less, and a D90 of 7.0 μm or greater and 15.0 μm or less.

18. A negative electrode for a lithium secondary battery, comprising:

    a negative electrode current collector layer; and

EP 4 657 560 A1

a negative electrode active material layer provided on one surface or both surfaces of the negative electrode current collector layer,
wherein the negative electrode active material layer comprises the negative electrode composition of claim 13 or a cured product thereof.

19. The negative electrode for a lithium secondary battery of claim 18, wherein a thickness of the negative electrode current collector layer is 1 $\mu$m or greater and 100 $\mu$m or less, and
wherein a thickness of the negative electrode active material layer is 5 $\mu$m or greater and 500 $\mu$m or less.

20. A lithium secondary battery comprising:

a positive electrode;
the negative electrode for a lithium secondary battery of claim 18;
a separator provided between the positive electrode and the negative electrode; and
an electrolyte.

[Figure 1]

[Figure 2]

[Figure 3]

[Figure 4]

[Figure 5]

[Figure 6]

$$Eqn_S = \frac{S_2 * m_2}{S_1 * m_1}$$

[Figure 7]

$$Eqn_V = \frac{V_2 * m_2}{V_1 * m_1}$$

## INTERNATIONAL SEARCH REPORT

| International application No. |
| --- |
| **PCT/KR2024/014707** |

| A. | CLASSIFICATION OF SUBJECT MATTER |
| --- | --- |

**H01M 4/36**(2006.01)i; **H01M 4/48**(2010.01)i; **H01M 4/38**(2006.01)i; **H01M 4/62**(2006.01)i; **H01M 4/134**(2010.01)i; **H01M 10/052**(2010.01)i; **C01B 33/021**(2006.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/36(2006.01); C01B 33/113(2006.01); C23C 14/10(2006.01); H01M 10/052(2010.01); H01M 4/134(2010.01); H01M 4/38(2006.01); H01M 4/48(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 실리콘(silicon), 활물질(active material), 음극(anode), 코팅층(coating layer), 결정립(crystal grain), 크기(size)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2018-037414 A (SONY CORP.) 08 March 2018 (2018-03-08)<br>See claims 1 and 2; and paragraphs [0018], [0020], [0025], [0052], [0053], [0078], [0079], [0115], [0116] and [0169]. | 1-20 |
| Y | KR 10-2016-0001481 A (LG CHEM, LTD.) 06 January 2016 (2016-01-06)<br>See claims 1 and 8; and paragraph [0049]. | 1-20 |
| Y | JP 2004-331480 A (DENKI KAGAKU KOGYO K. K.) 25 November 2004 (2004-11-25)<br>See claim 6; and paragraphs [0019] and [0033]. | 11,12 |
| Y | KR 10-2023-0058287 A (LG ENERGY SOLUTION, LTD.) 03 May 2023 (2023-05-03)<br>See claims 5 and 8; and paragraph [0101]. | 15-17 |
| A | KR 10-2009-0072533 A (SAMSUNG SDI CO., LTD.) 02 July 2009 (2009-07-02)<br>See claims 1-23. | 1-20 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 January 2025** | **14 January 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/014707**

| Patent document cited in search report | | | Publication date (day/month/year) | Patent family member(s) | | | Publication date (day/month/year) |
|---|---|---|---|---|---|---|---|
| JP | 2018-037414 | A | 08 March 2018 | JP | 2015-038894 | A | 26 February 2015 |
| | | | | JP | 2016-026381 | A | 12 February 2016 |
| | | | | JP | 2017-027959 | A | 02 February 2017 |
| | | | | JP | 5842985 | B2 | 13 January 2016 |
| | | | | JP | 6036967 | B2 | 30 November 2016 |
| | | | | JP | 6237859 | B2 | 29 November 2017 |
| KR | 10-2016-0001481 | A | 06 January 2016 | None | | | |
| JP | 2004-331480 | A | 25 November 2004 | JP | 3868396 | B2 | 17 January 2007 |
| KR | 10-2023-0058287 | A | 03 May 2023 | EP | 4283711 | A1 | 29 November 2023 |
| | | | | JP | 2024-508116 | A | 22 February 2024 |
| | | | | KR | 10-2601530 | B1 | 14 November 2023 |
| | | | | US | 2023-0125989 | A1 | 27 April 2023 |
| | | | | WO | 2023-068601 | A1 | 27 April 2023 |
| KR | 10-2009-0072533 | A | 02 July 2009 | KR | 10-1502897 | B1 | 17 March 2015 |
| | | | | US | 2009-0169994 | A1 | 02 July 2009 |
| | | | | US | 8546017 | B2 | 01 October 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230130500
- KR 1020240130793

- JP 2009080971 A